# EUROPÄISCHE PATENTSCHRIFT

(11) **EP 2 883 820 B1**
(45) Veröffentlichungstag und Bekanntmachung des Hinweises auf die Patenterteilung: **28.09.2016**
(21) Anmeldenummer: 14197357.8
(22) Anmeldetag: 11.12.2014
(51) Int. Cl.: B65G 47/31, B65H 31/30

(54) **Vorrichtung und Verfahren zum Eintakten von Buchblocks**
Device and method for synchronising book blocks
Dispositif et procédé destiné à cadencer des corps d'ouvrage

(30) Priorität: 16.12.2013 CH 20822013
(43) Veröffentlichungstag der Anmeldung: 17.06.2015
(73) Patentinhaber: Müller Martini Holding AG, 6052 Hergiswil (CH)
(72) Erfinder: Mösli, Urs, 8405 Winterthur (CH); Hörler, Beat, 8471 Bänk-Dägerlen (CH); Duss, Hanspeter, 5033 Buchs (CH)

(56) Entgegenhaltungen:
- DE-A1- 4 311 519
- GB-A- 2 098 157

## Beschreibung

Die vorliegende Erfindung betrifft eine Vorrichtung und ein Verfahren zum Eintakten von auf einem Zuförderer in beliebigen Abständen nacheinander zugeführten Buchblocks in einen Wegförderer, der in einem vorgegebenen Abstand angeordnete Mitnehmer aufweist, wobei die Vorrichtung eine mit dem Zuförderer und dem Wegförderer verbundene Steuerung besitzt.

Bei Buchbindemaschinen ist es üblich, zu verarbeitende Produkte in einem getakteten Transportsystem durch die Maschine zu transportieren. Während des Transports werden die Produkte an verschiedenen Bearbeitungsstationen vorbei geführt und bearbeitet. Um die Produkte in das getaktete Transportsystem einzubringen, müssen sie so vorbereitet werden, dass sie einzeln und zum richtigen Zeitpunkt, das heisst getaktet in dieses Transportsystem eingeführt werden können.

Aus der DE2346407 ist eine Vorrichtung zur Regulierung der Zufuhr von Gegenständen zu einer Verpackungsmaschine bekannt geworden, wobei die Vorrichtung nacheinander angeordnet ein Speicherband, ein schneller laufendes Band zur Abstandsbildung und ein Transportband aufweist. Diese Vorrichtung eignet sich für das Eintakten von Gegenständen wie Bücher oder Buchblocks mit unterschiedlichen Abmessungen. Das Speicherband wird mit aneinander anliegenden Gegenständen beschickt, welche anschliessend an das schneller laufende Band übergeben werden. Während dieser Übergabe werden die Gegenstände vereinzelt, d.h. sie werden derart auseinandergezogen, dass sie einen Abstand erhalten, der im Wesentlichen dem Abstand der Mitnehmer des nachfolgenden Transportbandes entspricht, an welches die Gegenstände schliesslich übergeben werden. Gegenstände unterschiedlicher Länge können mit dieser Vorrichtung eingetaktet werden, indem das Speicherband in Abhängigkeit von der Länge der Gegenstände mit höherer oder niedriger Transportgeschwindigkeit beaufschlagt wird. Derartige Verfahren sind jedoch bei Verwendung von Buchblocks aus losen Bogen und/oder Einzelblättern problematisch. Werden die Buchblocks von der Geschwindigkeit des Speicherbandes auf die Geschwindigkeit des schneller laufenden Bandes beschleunigt, so können diese auseinanderfallen, wenn die Reibung zwischen der unteren Seite des Buchblocks und der Oberfläche des Transportbandes grösser als die Reibung der Bogen und/oder der Einzelblätter untereinander ist.

Aus der DE29504431 U1 ist eine Vorrichtung zum Einlegen von Gegenständen in eine Verpackungsmaschine bekannt geworden. Ein Rollenteppich transportiert die Gegenstände mit beliebigen Abständen zu einem Stauband, auf welchem die Gegenstände derart aufgestaut werden, dass sie aneinander anliegen. Danach werden diese Gegenstände über ein Vereinzelungsband im aneinander anliegenden Zustand weiter transportiert und an dessen Ende vereinzelt und anschliessend mittels eines Eintaktbandes an die Verpackungsmaschine weitergefördert. Die Übergabe vom Vereinzelungsband an das Eintaktband erfolgt indem die Vorderkante eines Gegenstands am Ausgang des Vereinzelungsbandes über Sensoren, insbesondere Fotozellen erfasst wird und der Antrieb des Bandes das Band so bewegt oder stoppt, dass die Gegenstände in zwischen den Mitnehmern des Zulieferbandes befindliche Lücken eingefördert werden. Diese Vorrichtung eignet sich für Gegenstände, die eine grosse Reibung zwischen ihrer Auflagefläche und dem Vereinzelungsband aufweisen und die bei Beschleunigungen, die sich beim Start-Stopp-Betrieb des Vereinzelungsbandes ergeben, keinen Schaden nehmen. Buchblocks, die aus einzelnen losen Bogen und/oder Einzelblättem bestehen, können aufgrund einer solchen Beschleunigung des Vereinzelungsbandes auseinanderfallen und/oder die Ausrichtung der Bogen und/oder Einzelblätter innerhalb eines Buchblocks kann sich unzulässig verändern.

Aus der DE202010001437 U1 ist eine Vorrichtung zum Zuführen von einzelnen oder gestapelten Falzbogen, Buchblocks, Büchern oder ähnliche Gegenständen zu einer Weiterverarbeitungsmaschine bekannt geworden. Mit dieser Vorrichtung werden die Gegenstände aufeinanderfolgend auf einen als ersten Bandförderer ausgebildeten Zuförderer transportiert, welcher am stromabwärtigen Ende ein Sperrelement aufweist, mit dem die Gegenstände zurückgehalten oder synchronisiert auf einen Abnehmertakt freigegeben werden können. Unmittelbar nach dem Zuförderer ist ein zweiter Bandförderer angeordnet, welcher mit einer grösseren Geschwindigkeit betrieben wird als der erste Bandförderer. Damit wird der vorderste Gegenstand bei Freigabe durch das Sperrelement mehr beschleunigt als die nachfolgenden Gegenstände und das Sperrelement kann in die entstehende Lücke zwischen den Gegenständen eingefahren werden. Weiterhin ist im Bereich des Zuförderers eine auf den Gegenständen abrollende, mit einer Rücklaufsperre ausgerüstete Druckrolle angeordnet, mit welcher die transportierten Gegenstände daran gehindert werden zurückzuprallen, wenn sie am Sperrelement anschlagen. Ferner ermöglicht die Druckrolle ein rasches Beschleunigen des unter der Druckrolle liegenden Gegenstands, sobald dieser durch das Sperrelement freigegeben wird. Beim Übergang eines Gegenstands vom ersten Bandförderer auf den zweiten Bandförderer erfährt dieser Gegenstand eine Beschleunigung, die von der Reibung zwischen dem Gegenstand und dem zweiten Bandförderer abhängt. Ist die Reibung hoch, so wird der Gegenstand stark beschleunigt. Im Falle eines losen Buchblocks aus Bogen und/oder Einzelblättern besteht dabei die Gefahr, dass der Buchblock auseinanderfallen und/oder die Ausrichtung der Bogen und/oder Einzelblätter im Buchblock verändert werden kann. Dagegen können bei einer geringen Reibung keine hohen Produktionsgeschwindigkeiten erreicht werden. Da die Reibung zwischen den Gegenständen und dem zweiten Bandförderer durch dessen Material bestimmt wird, kann sie nur durch ein aufwändiges Austauschen des zweiten Bandförderers verändert werden. Zudem wird viel Zeit für das Bilden der Lücken zwischen den Gegenständen und das Stoppen und Freigeben der Gegenstände durch das Sperrelement benötigt.

Mit diesen Vorrichtungen des Standes der Technik kann demnach eine sichere Anordnung der Bogen und/oder Einzelblätter im Buchblock unter Beibehaltung ihrer erforderlichen Ausrichtung nicht garantiert werden.

GB 2 098 157 A offenbart den Oberbegriff der Ansprüche 1 und 5.

Aufgabe der Erfindung ist es, eine einfache, kostengünstige Vorrichtung und ein Verfahren zur Verfügung zu stellen, mit denen Buchblocks einem getakteten Wegförderer mit einer hohen Produktionsgeschwindigkeit zugeführt werden können. Dabei soll die Anordnung der Buchblocks erhalten und/oder die erforderliche Ausrichtung der Bogen und/oder Einzelblätter im Buchblock nicht verändert werden.

Die Aufgabe wird durch eine Vorrichtung mit den Merkmalen des kennzeichnenden Teils des Anspruchs 5 gelöst. Dabei weist die Vorrichtung einen stromab des Zuförderers angeordneten, mit der Steuerung verbundenen und mit einer ersten Geschwindigkeit betriebenen Stauförderer auf, auf dem mehrere Buchblocks lückenlos aneinander anliegend mit der ersten Geschwindigkeit transportierbar sind. Darüber hinaus weist die Vorrichtung einen stromab des Stauförderers angeordneten, mit der Steuerung verbundenen und zum Transport jeweils eines einzigen Buchblocks ausgebildeten Eintaktförderer auf, wobei jeweils ein einziger Buchblock mit der ersten Geschwindigkeit vom Stauförderer auf den Eintaktförderer übergebbar ist. Dabei ist der Buchblock mit dem Eintaktförderer von der ersten Geschwindigkeit auf eine zweite Geschwindigkeit beschleunigbar, mit der zweiten Geschwindigkeit zum Wegförderer transportierbar sowie zwischen zwei aufeinanderfolgende Mitnehmer an den Wegförderer übergebbar.

Erfindungsgemäß ist stromab des Eintaktförderers und stromauf des Wegförderers ein mit der Steuerung verbundener und mit einer veränderbaren Geschwindigkeit antreibbarer Weiterförderer angeordnet. Dabei ist zumindest ein Buchblock mit der Geschwindigkeit des Eintaktförderers übernehmbar und vom Weiterförderer an den Wegförderer übergebbar. Im Bereich des Weiterförderers ist eine Einrichtung zum Erfassen der Lage und/oder des Formats des Buchblocks, insbesondere seiner Abmessung in Förderrichtung angeordnet, wobei ein aus der Erfassung resultierender Wert mit einem der Steuerung bekannten Vorgabewert vergleichbar und das Vergleichsergebnis zum Variieren der Geschwindigkeit des Weiterförderers verwendbar ist. Daraus ergibt sich der Vorteil, dass Buchblocks durch variierbare Geschwindigkeitsänderung des Weiterförderers nacheinander noch genauer zwischen zwei aufeinanderfolgende Mitnehmer des Wegförderers übergeben werden können.

Der Eintaktförderer kann mit einem Antrieb ausgestattet sein, wobei im Bereich des Eintaktförderers mindestens ein Sensor zur Erfassung der Lage des Buchblocks auf dem Eintaktförderer angeordnet ist und wobei der Antrieb und der mindestens eine Sensor mit der Steuerung verbunden sind. Der Antrieb des Eintaktförderers kann somit zusätzlich entsprechend der vom Sensor an die Steuerung übertragenen Daten zur Lage des Buchblocks auf dem Eintaktförderer beschleunigt oder verzögert werden.

In einer weiteren Ausführungsform der Vorrichtung ist die Steuerung mit einem Drehwinkelsensor, insbesondere einem Inkrementalgeber eines Antriebs des Wegförderers verbunden. Dadurch kann die Steuerung eine Solllage des Buchblocks für jeden Streckenabschnitt des Eintaktförderers und ggf. des Weiterförderers bestimmen. Weiterhin kann eine bessere Vorbereitung für das Eintakten des Buchblocks dadurch erzielt werden, dass die erste Geschwindigkeit des Stauförderers auf Grund einer Abweichung der tatsächlichen Lage des Buchblocks zu seiner Solllage mit der Steuerung veränderbar ist.

In einer weiteren Ausführungsform der Vorrichtung ist bei einer Veränderung der Geschwindigkeit des Eintaktförderes über die Steuerung eine maximal zulässige Beschleunigung aus Produktinformationen der zu verarbeitenden Buchblocks ermittelbar und/oder während des Betriebs bestimmbar. Dadurch kann die Vorrichtung zum Eintakten mit einer Maximalgeschwindigkeit betrieben werden, bei der noch ein sicherer Transport der Buchblocks, ohne Verschieben der Bogen und/oder Einzelblätter im Buchblocks möglich ist.

In einer weiteren Ausführungsform der Vorrichtung ist die Steuerung vorteilhaft mit einer Datenbank verbunden, in der weitere Produktinformationen über die zu verarbeitenden Buchblocks gespeichert sind.

In einer weiteren Ausführungsform der Vorrichtung ist oberhalb des Eintaktförderers eine auf den Eintaktförderer gerichtete Düsenkonfiguration angeordnet und mit einem Gasreservoir verbunden. Gegenüber einer ebenfalls möglichen Ausführungsform mit einem zum Andrücken der Buchblocks an den Eintaktförderer verwendeten Oberband oder mit Druckrollen können die Buchblocks somit ohne aufwändige Verstellung und unabhängig von ihrer Dicke verarbeitet werden.

Weiterhin kann im Bereich des Stauförderers eine mit der Steuerung verbundene Leseeinrichtung angeordnet sein, mit der Identifikationsmerkmale der Buchblocks erfassbar und an die Steuerung weiterleitbar sind. Aufgrund der erfassten Identifikationsmerkmale der Buchblocks sowie weiterer Daten, insbesondere Formatdaten aus einer Datenbank oder eines externen Speichers, oder aus den Identifikationsmerkmalen selbst, ist die Geschwindigkeit des Stauförderers variierbar. Damit ist eine höhere Flexibilität der Vorrichtung erreichbar, wobei eine Anpassung an unterschiedliche Merkmale der Buchblocks erfolgen kann.

Die erfindungsgemässe Aufgabe wird auch durch ein Verfahren mit den Merkmalen des kennzeichnenden Teils des Anspruchs 1 gelöst. Dabei wird der Eintaktförderer mit der Steuerung so auf den Wegförderer eingestellt, dass die Buchblocks ohne eine mechanische Verformung oder Beschädigung in die gewünschte Position zwischen zwei aufeinanderfolgende Mitnehmer an den Wegförderer übergeben werden.

Erfindungsgemäß wird zumindest ein Buchblock vom Eintaktförderer an einen stromab angeordneten Weiterförderer und von diesem an den Wegförderer übergeben. Im Bereich des Weiterförderers wird die Lage und/oder das Format des Buchblocks erfasst, insbesondere seine Abmessung in Förderrichtung. Ein aus der Erfassung resultierender Wert wird mit einem der Steuerung bekannten Vorgabewert verglichen, wobei das Vergleichsergebnis zum entsprechenden Variieren der Geschwindigkeit des Weiterförderers verwendet wird. Daraus ergibt sich der Vorteil, dass nacheinander geförderte Buchblocks noch genauer zwischen zwei aufeinanderfolgende Mitnehmer des Wegförderers übergeben werden können.

Es hat sich als vorteilhaft erwiesen, wenn der Weiterförderer den zumindest einen Buchblock dem Wegförderer mit der zweiten Geschwindigkeit zuführt. Dieser Vorgang bietet den Vorteil, dass die Geschwindigkeit des Eintaktförderers nicht auf die Geschwindigkeit des Wegförderers erhöht werden muss, weil der Weiterförderer den Buchblock mit niedriger Geschwindigkeit übernehmen und auf die Geschwindigkeit des Wegförderers beschleunigen kann.

Eine weitere Fortbildung des Verfahrens ergibt sich, wenn ein im Bereich des Eintaktförderers angeordneter, mit einer Steuerung verbundener Sensor die Lage des jeweils auf dem Eintaktförderer transportierten Buchblocks ermittelt, wobei die Steuerung die ermittelte Lage des Buchblocks mit einer Solllage vergleicht und bei einer Lageabweichung die Lage des Buchblocks durch eine entsprechende Ansteuerung des Eintaktförderers bis zu einer maximal zulässigen Beschleunigung des Buchblocks korrigiert. Dadurch kann eine noch genauere Positionierung der Buchblocks zwischen den Mitnehmern des Wegförderers erzielt werden.

Es hat sich ebenfalls als vorteilhaft erwiesen, wenn eine im Bereich des Stauförderers angeordnete, mit der Steuerung verbundene Leseeinrichtung auf den Buchblocks angeordnete Identifikationsmerkmale erfasst und an die Steuerung weiterleitet. Die Geschwindigkeit des Stauförderers wird aufgrund der erfassten Identifikationsmerkmale der Buchblocks sowie weiterer Daten, insbesondere Formatdaten aus einer Datenbank oder eines externen Speichers, oder aus den Identifikationsmerkmalen selbst, variiert. Als Folge davon kann eine flexible Anpassung des Transportvorgangs an die spezifischen Merkmale der Buchblocks, insbesondere an deren Formate, erfolgen.

Nachstehend wird die Erfindung anhand von Figuren näher erläutert. Es zeigen:
- Fig. 1: eine erstes Ausführungsbeispiel der erfindungsgemässen Vorrichtung,
- Fig. 2: ein zweites Ausführungsbeispiel der erfindungsgemässen Vorrichtung.

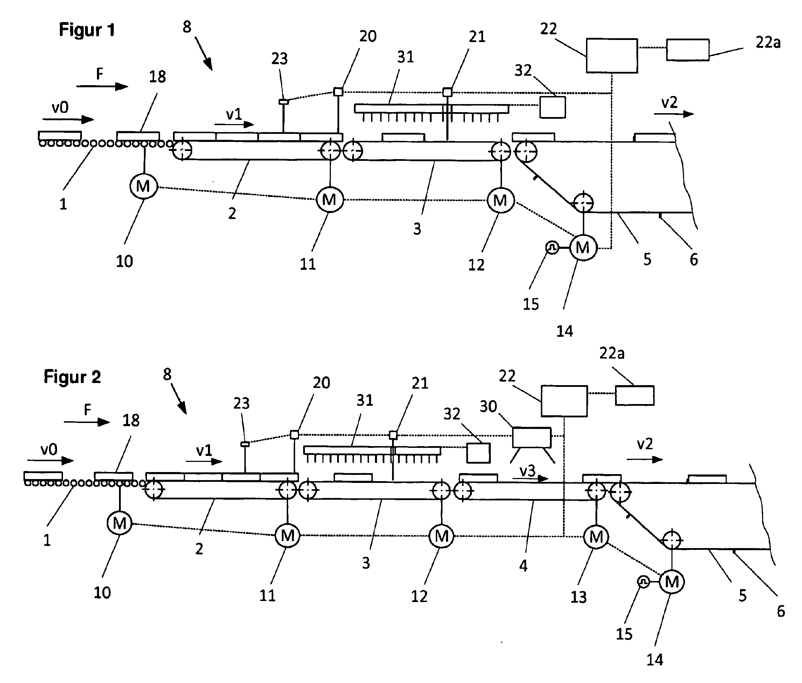

Fig. 1 stellt eine erstes Ausführungsbeispiel der erfindungsgemässen Vorrichtung 8 dar, bei der ein Zuförderer 1, ein Stauförderer 2 und ein Eintaktförderer 3 in einer Förderrichtung F in Reihe nacheinander und stromauf eines Wegförderers 5 angeordnet sind. Der mit mehreren, in gleichen Abständen angeordneten Mitnehmern 6 ausgestattete Wegförderer 5 transportiert Buchblocks 18 zu einer nachgeordneten, nicht dargestellten Weiterverarbeitungsmaschine für die Bearbeitung der Buchblocks 18. Die Zeit die verstreicht bis ein nachfolgender Mitnehmer die Position eines vorhergehenden Mitnehmers einnimmt wird dabei als Takt angesehen. Die Bearbeitungsmaschine und/oder der Wegförderer können kontinuierlich oder schwellend betrieben werden. Eine solche Arbeitsweise wird getaktet genannt. Die Mitnehmer 6 des Wegförderers 5 sind mit den Arbeitstakten der Weiterverarbeitungsmaschine synchronisiert, d.h. ebenfalls getaktet. Natürlich kann stromab des Wegförderers 5 statt einer Weiterverarbeitungsmaschine auch eine andere Einrichtung angeordnet sein, mit der die Buchblocks 18 getaktet transportiert werden.

Der Zuförderer 1 ist beispielhaft als Rollenförderer ausgebildet und mit einem vorzugsweise als frequenzgesteuerter Asynchronmotor ausgebildeten, ersten Antrieb 10 antriebsverbunden. Als Zuförderer 1 wird vorzugsweise ein Sliptorque-Förderer eingesetzt, d.h. ein Förderer, bei dem die Vortriebskraft für die Buchblocks 18 kleiner als die Reibkraft zwischen den Rollen des Zuförderers 1 und dem Buchblock 18 ist.

Der Stauförderer 2 verfügt über einen zweiten Antrieb 11, der ebenfalls als frequenzgesteuerter Asynchronmotor ausgebildet sein kann. Im Bereich des Stauförderers 2 sind eine Leseeinrichtung 23 für Identifikationsmerkmale des Buchblocks 18 und ein beispielsweise als Fotozelle ausgebildeter Sensor 20 angeordnet, letzterer vorzugsweise oberhalb des stromabwärtigen Endes des Stauförderers 2.

Der Eintaktförderer 3 weist einen als drehwinkelgesteuerter Motor ausgebildeten Antrieb 12 auf. In einer bevorzugten Ausführungsform ist im Bereich und vorzugsweise oberhalb des Eintaktförderers 3 ein Sensor 21 angeordnet, welcher zur Erfassung der Lage des Buchblocks 18 auf dem Eintaktförderer 3 dient. In einer weiteren bevorzugten Ausführungsform ist oberhalb des Eintaktförderers 3 eine Düsenkonfiguration 31 angeordnet und mit einem Gasreservoir 32 verbunden. Das Gasreservoir 32 kann zudem eine nicht dargestellte Verbindung zur Steuerung 22 aufweisen. Natürlich kann der Eintaktförderer 3 sowohl mit als auch ohne den Sensor 21 und/oder mit oder ohne die Düsenkonfiguration 31 betrieben werden. Der Wegförderer 5 verfügt über einen als Motor ausgebildeten Antrieb 14, der mit einem als Inkrementalgeber ausgebildeten Drehwinkelsensor 15 ausgestattet ist.

Sämtliche elektrischen Einrichtungen 10, 11, 12, 14, 15, 20, 21, 23 der Vorrichtung 8 sind mit einer gemeinsamen Steuerung 22 verbunden, welcher Produktparameter der Buchblocks 18 über eine Datenbank 22a oder eine Handeingabe zuführbar sind.

Die Steuerung 22 erhält vom Drehwinkelsensor 15 und aus ihr bekannten Daten die nötigen Informationen, um die Lage der Mitnehmer 6 zum aktuellen Drehwinkel des Antriebs 14 des Wegförderers 5 zu bestimmen. Mit Hilfe dieser Information wird der Eintaktförderer 3 so angetrieben, d.h. auf die Geschwindigkeit v2 beschleunigt, dass der jeweilige Buchblock 18 vom Eintaktförderer 3 in die gewünschte Position zwischen die Mitnehmer 6 des Wegförderer 5 eingeführt wird. Indem die Mitnehmer 6 anschliessend an den Buchblock 18 heranfahren und dessen Transport auf dem Wegförderer 5 übernehmen, ist dieser Buchblock 18 schliesslich auf den Wegförderer 5 eingetaktet.

In der Fig. 2 ist ein zweites Ausführungsbeispiel der Vorrichtung 8 dargestellt, bei dem stromab des Eintaktförderers 3 und stromauf des Wegförderers 5 ein ebenfalls mit der Steuerung 22 verbundener Weiterförderer 4 angeordnet ist. Der Weiterförderer 4 verfügt über einen Antrieb 13, der als frequenzgesteuerter Asynchronmotor oder als drehwinkelgesteuerter Motor ausgebildet sein kann.

Darüber hinaus kann im Bereich des Weiterförderers 4 eine mit einer Wegerfassung verbundene Einrichtung 30 zum Erfassen der Lage und/oder des Formats des Buchblocks 18, insbesondere seiner Abmessung in Förderrichtung F, angeordnet sein. Dabei erfolgt die Anordnung der beispielsweise als eine Kamera oder ein Laservorhang ausgebildeten Einrichtung 30 vorteilhaft oberhalb des Weiterförderers 4.

Auch im zweiten Ausführungsbeispiel verfügt die Vorrichtung 8 optional über die mit dem Gasreservoir 32 verbundene Düsenkonfiguration 31.

Beim Betrieb der Vorrichtung 8 gemäss des ersten Ausführungsbeispiels werden auf den genannten Fördervorrichtungen 1, 2, 3, 5 mehrere Buchblocks 18 transportiert, welche jeweils aus lose oder temporär fixierten Bogen und/oder Einzelblätter, Büchern oder ähnlichen Druckprodukten bestehen können. Die Buchblocks 18 können Identifikationsmerkmale, wie z.B. RFID, Barcode usw. aufweisen.

Die Buchblocks 18 werden zunächst in unregelmässigen Abständen in Förderrichtung F vom Zuförderer 1 mit einer Geschwindigkeit v0 zum Stauförderer 2 transportiert und derart gestaut, dass sie lückenlos aneinander anliegen, d.h. die Lücken zwischen den Buchblocks 18 geschlossen werden. Der Stauförderer 2 wird mit einer ersten Geschwindigkeit v1 betrieben, die geringer ist als die Geschwindigkeit v0 des Zuförderers 1.

Mit dem Stauförderer 2 werden die gestauten Buchblocks 18 mit der Geschwindigkeit v1 in Richtung Eintaktförderer 3 transportiert und an diesen übergeben. Durch eine Anpassung der Geschwindigkeit v1 kann der Buchblock 18 früher oder später übergeben werden, so dass seine Übergabe an den Eintaktförderer 3 zum richtigen Zeitpunkt erfolgt. Kann ein Buchblock 18 jedoch nicht rechtzeitig der Übergabestelle zwischen Stauförderer 2 und Eintaktförderer 3 bereitgestellt werden, so wird der Antrieb 11 des Stauförderers 2 gestoppt und ein Leertakt erzeugt. Dazu erfasst der vorzugsweise am Ende des Stauförderers 2 angeordnete Sensor 20 eine Vorderkante eines Buchblocks 18, übermittelt ein entsprechendes Signal an die Steuerung 22, welche ihrerseits den Antrieb 12 des Eintaktförderers 3 derart ansteuert, dass der Eintaktförderer 3 während der Übergabe des Buchblocks 18 vom Stauförderer 2 an den Eintaktförderer 3 mit einer gleichen oder annähernd gleichen Geschwindigkeit wie der Stauförderer 2 betrieben wird.

Sobald ein Buchblock 18 mit seinem Schwerpunkt so auf dem Eintaktförderer 3 liegt, dass der Buchblock 18 ohne Schlupf beschleunigt werden kann, wird die Geschwindigkeit des Eintaktförderers 3 bis auf eine Geschwindigkeit v2 erhöht, welche im Wesentlichen der Geschwindigkeit des Wegförderers 5 entspricht. Dadurch wird der Buchblock 18 beschleunigt und vereinzelt. Die Beschleunigung wird dabei so gewählt, dass die Ausrichtung der Bogen und/oder Einzelblätter des Buchblocks 18 nicht verändert oder zerstört wird und der Buchblock 18 gegenüber dem Eintaktförderer 3 keinen Schlupf aufweist.

Mit dem vorzugsweise oberhalb des Eintaktförderers 3 angeordneten Sensor 21 wird die Lage des Buchblocks 18 auf dem Eintaktförderer 3 erfasst. Die Steuerung 22 vergleicht hier die erfasste Lage des Buchblocks 18 mit seiner Solllage. Abweichungen können durch eine entsprechende Ansteuerung des Antriebs 12 korrigiert werden. Bei diesen Korrekturen berücksichtigt die Steuerung 22 die zu Grunde gelegten, maximal zulässigen Beschleunigungen für den Buchblock 18.

Das Erreichen der zweiten Geschwindigkeit v2 des Eintaktförderers 3 ist erforderlich, damit der Buchblock 18 in den Zwischenraum zweier aufeinanderfolgender Mitnehmer 6 des nachfolgenden Wegförderers 5 eingeführt werden kann. Hat der Buchblock 18 die Geschwindigkeit v2 erreicht, wird der Eintaktförderer 3 nachfolgend mit konstanter Geschwindigkeit betrieben und der Buchblock 18 an den Wegförderer 5 übergeben. Nach der Übernahme durch den Wegförderer 5 wird dessen jeweiliger Mitnehmer 6 an den Buchblock 18 herangefahren, so dass der Buchblock 18 dann mittels dieses Mitnehmers 6 getaktet zur nicht dargestellten Weiterverarbeitungsmaschine transportiert wird. Das Eintakten des auf dem Zuförderer 1 zugeführten Buchblocks 18 in den Wegförderer 5 ist damit abgeschlossen.

Sobald der Buchblock 18 an den Wegförderer 5 übergeben ist, verlangsamt der Eintaktförderer 3 seine Geschwindigkeit bis er wieder die erste Geschwindigkeit v1 aufweist. Damit ist der Eintaktförderer 3 in der Lage den nächsten Buchblock 18 vom Stauförderer 2 zu übernehmen.

Beim zweiten Ausführungsbeispiel wird der zwischen dem Eintaktförderer 3 und dem Wegförderer 5 angeordnete Weiterförderer 4 mit einer veränderbaren Geschwindigkeit v3, in etwa synchron zum Eintaktförderer 3 betrieben, transportiert den Buchblock 18 weiter und übergibt ihn an den Wegförderer 5.

Der Weiterförderer 4 kann als einfacher Weiterförderer oder als Korrekturband eingesetzt werden. Wird der Weiterförderer 4 als Korrekturband eingesetzt, so erfasst ein nicht dargestellter weiterer Sensor die Lage des Buchblocks 18 auf dem Weiterförderer 4 und die Steuerung 22 korrigiert über den Antrieb 13 die Lageabweichung des Buchblocks 18 von seiner Solllage.

Mit der Vorrichtung 8 ist für jeden Buchblock 18 eine maximal mögliche Verarbeitungsgeschwindigkeit aus den Produkt- und Vorrichtungsparametern rechnerisch bestimmbar. Der Produktparameter "maximal zulässige Beschleunigung ohne Veränderung der Ausrichtung der Bogen und/oder Einzelblätter im Buchblock" ist ein wichtiger Parameter. Er kann der Steuerung 22 zusammen mit den Produktdaten über die Datenbank 22a zur Verfügung gestellt oder durch eine Handeingabe an der Steuerung 22 eingegeben werden.

Eine Methode diesen Produktparameter zu bestimmen kann wie folgt aussehen: Die Steuerung 22 startet die Vorrichtung 8 mit einem kleinen Beschleunigungswert. Im Laufe der Produktion steigert die Steuerung 22 den Beschleunigungswert automatisch und die vorzugsweise oberhalb des Weiterförderers 4 angeordnete Einrichtung 30 kontrolliert die Ausrichtung der Bogen und/oder Einzelblätter des Buchblocks 18. Wird eine Veränderung in der Ausrichtung der Bogen und/oder Einzelblätter im Buchblock 18 festgestellt, so wird diese Information benutzt, um den maximal zulässigen Beschleunigungswert für den Auftrag mit den entsprechenden Buchblocks 18 zu definieren "

In einer weiteren Ausführungsvariante sowohl des ersten als auch des zweiten Ausführungsbeispiels kann mittels der zusätzlichen Düsenkonfiguration 31 Luft oder ein anderes Gas aus dem Gasreservoir 32 auf den auf dem Eintaktförderer 3 transportierten Buchblock 18 geblasen werden. Das Gasreservoir 32 kann mit der Steuerung 22 verbunden sein. Bei Produktionsunterbrüchen kann die Gaszufuhr daher mittels der Steuerung 22 gestoppt werden. Zudem ist mit der Steuerung 22 eine genaue Dosierung der ausgeströmten Gasmenge möglich. Durch den Gasstrom, der aus mehreren Düsenlöchern der Düsenkonfiguration 31 ausströmt werden die Bogen und/oder Einzelblätter des Buchblocks 18 mit einer zusätzlichen Kraft beaufschlagt, die wie eine Gewichtskraft wirkt. Diese zusätzliche Gewichtskraft erhöht die Kraft, die benötigt wird um die Bogen und/oder Einzelblätter im Buchblock 18 gegeneinander zu verschieben. Diese erhöhte Kraft führt dazu, dass der Eintaktförderer 3 grösseren Beschleunigungen ausgesetzt werden kann, ohne dass der darauf transportierte Buchblock 18 seine Ausrichtung der Bogen und/oder Einzelblätter verändert.

Die Vorrichtung 8 gemäss der obigen Beschreibung kann auch für Aufträge eingesetzt werden, bei denen sich das Format des Buchblocks 18 von Buch zu Buch ändert. Mit der Leseeinrichtung 23 werden die Identifikationsmerkmale jedes Buchblocks 18 erfasst. Das für die nachfolgende Ansteuerung der Vorrichtung 8 notwendige Format des Buchblocks 18 in Förderrichtung F wird aus dem Identifikationsmerkmal (RFID, Barcode etc.) oder aus einer Datenbank ausgelesen und zur Ermittlung der Stellgrössen der Vorrichtung 8 verwendet. Dazu kann auch die Einrichtung 30 eingesetzt werden, mit welcher die Lage und/oder das Format des Buchblocks 18, insbesondere seiner Abmessung in Förderrichtung F, erfasst und der Steuerung 22 übermittelt wird. Durch ein entsprechendes Verändern der Geschwindigkeit v1 des Stauförderers 2 kann somit die Zufuhr von Buchblocks 18 in einen getakteten Wegförderer 5 ohne Ausbildung von Leertakten realisiert werden.

## Patentansprüche

1. Verfahren zum Eintakten von auf einem Zuförderer (1) in beliebigen Abständen nacheinander zugeführten Buchblocks (18) in einen Wegförderer (5), der in einem vorgegebenen Abstand angeordnete Mitnehmer (6) aufweist, wobei der Zuförderer (1) und der Wegförderer (5) mit einer Steuerung (22) verbunden sind, wobei
• die Buchblocks (18) vom Zuförderer (1) an einen stromab angeordneten Stauförderer (2) übergeben werden,
• die Buchblocks (18) auf dem Stauförderer (2) lückenlos aneinander anliegend mit einer ersten Geschwindigkeit (v1) transportiert werden,
• ein einzelner Buchblock (18) mit der ersten Geschwindigkeit (v1) vom Stauförderer (2) auf einen stromab angeordneten, mit der Steuerung (22) verbundenen Eintaktförderer (3) übernommen und mit dem Eintaktförderer (3) von der ersten Geschwindigkeit (v1) auf eine zweite Geschwindigkeit (v2) beschleunigt wird,
• der Buchblock (18) mit der zweiten Geschwindigkeit (v2) zum Wegförderer (5) transportiert und zwischen zwei aufeinanderfolgende Mitnehmer (6) an den Wegförderer (5) übergeben wird,
**dadurch gekennzeichnet, dass** zumindest ein Buchblock (18) vom Eintaktförderer (3) an einen stromab angeordneten, mit der Steuerung (22) verbundenen Weiterförderer (4) und von diesem an den Wegförderer (5) übergeben wird, wobei im Bereich des Weiterförderers (4) die Lage und/oder das Format des Buchblocks (18), insbesondere seine Abmessung in Förderrichtung, erfasst wird, und wobei ein aus der Erfassung resultierender Wert mit einem der Steuerung (22) bekannten Vorgabewert verglichen wird, und das Vergleichsergebnis zum Variieren der Geschwindigkeit des Weiterförderers (4) verwendet wird.

2. Verfahren nach Anspruch 1, **dadurch gekennzeichnet, dass** der zumindest eine Buchblock (18) mit dem Weiterförderer (4) mit der zweiten Geschwindigkeit (v2) dem Wegförderer (5) zugeführt wird.

3. Verfahren nach einem der Ansprüche 1 oder 2, **dadurch gekennzeichnet, dass** ein im Bereich des Eintaktförderers (3) angeordneter, mit der Steuerung (22) verbundener Sensor (21) die Lage des jeweils auf dem Eintaktförderer (3) transportierten Buchblocks (18) ermittelt, wobei die Steuerung (22) die ermittelte Lage des Buchblocks (18) mit einer Solllage vergleicht und bei einer Lageabweichung die Lage des Buchblocks (18) durch eine entsprechende Ansteuerung des Eintaktförderers (3) bis zu einer maximal zulässigen Beschleunigung des Buchblocks (18) korrigiert.

4. Verfahren nach einem der Ansprüche 1 bis 3, **dadurch gekennzeichnet, dass** eine im Bereich des Stauförderers (2) angeordnete, mit der Steuerung (22) verbundene Leseeinrichtung (23) auf den Buchblocks (18) angeordnete Identifikationsmerkmale erfasst und an die Steuerung (22) weiterleitet, wobei die Geschwindigkeit (v1) des Stauförderers (2) aufgrund der erfassten Identifikationsmerkmale der Buchblocks (18) sowie aufgrund weiterer Daten, insbesondere Formatdaten aus einer Datenbank oder eines externen Speichers, oder aus den Identifikationsmerkmalen selbst variiert wird.

5. Vorrichtung zum Eintakten von auf einem Zuförderer (1) in beliebigen Abständen nacheinander zugeführten Buchblocks (18) in einen Wegförderer (5), der in einem vorgegebenen Abstand angeordnete Mitnehmer (6) aufweist, wobei die Vorrichtung (8) eine mit dem Zuförderer (1) und dem Wegförderer (5) verbundene Steuerung (22) besitzt, wobei die Vorrichtung (8)
• einen stromab des Zuförderers (1) angeordneten, mit der Steuerung (22) verbundenen und mit einer ersten Geschwindigkeit (v1) betriebenen Stauförderer (2) aufweist, auf dem mehrere Buchblocks (18) lückenlos aneinander anliegend mit der ersten Geschwindigkeit (v1) transportierbar sind,
• einen stromab des Stauförderers (2) angeordneten, mit der Steuerung (22) verbundenen und zum Transport jeweils eines einzigen Buchblocks (18) ausgebildeten Eintaktförderer (3) aufweist, wobei jeweils ein einziger Buchblock (18) mit der ersten Geschwindigkeit (v1) vom Stauförderer (2) auf den Eintaktförderer (3) übergebbar ist, und wobei der Buchblock (18) mit dem Eintaktförderer (3) von der ersten Geschwindigkeit (v1) auf eine zweite Geschwindigkeit (v2) beschleunigbar, mit der zweiten Geschwindigkeit (v2) zum Wegförderer (5) transportierbar sowie zwischen zwei aufeinanderfolgende Mitnehmer (6) an den Wegförderer (5) übergebbar ist,
**dadurch gekennzeichnet, dass** stromab des Eintaktförderers (3) und stromauf des Wegförderers (5) ein mit der Steuerung (22) verbundener und mit einer veränderbaren Geschwindigkeit (v3) antreibbarer Weiterförderer (4) angeordnet ist, mit dem zumindest ein Buchblock (18) mit der Geschwindigkeit des Eintaktförderers (3) übernehmbar und an den Wegförderer (5) übergebbar ist, wobei im Bereich des Weiterförderers (4) eine mit der Steuerung (22) verbundene Einrichtung (30) zum Erfassen der Lage und/oder des Formats des Buchblocks (18), insbesondere seiner Abmessung in Förderrichtung, angeordnet ist, wobei die Vorrichtung die Einrichtung aufweist, wobei ein aus der Erfassung resultierender Wert mit einem der Steuerung (22) bekannten Vorgabewert vergleichbar und das Vergleichsergebnis zum Variieren der Geschwindigkeit des Weiterförderers (4) verwendbar ist,
, wobei die Steuerung (22) dazu geeignet ist, in Betrieb die Vorrichtung zu veranlassen, das Verfahren gemäß Anspruch 1 auszuführen.

6. Vorrichtung nach Anspruch 5, **dadurch gekennzeichnet, dass** der Eintaktförderer (3) mit einem Antrieb (12) ausgestattet ist, wobei im Bereich des Eintaktförderers (3) ein Sensor (21) angeordnet ist und wobei der Antrieb (12) und der Sensor (21) mit der Steuerung (22) verbunden sind.

7. Vorrichtung nach Anspruch 5 oder 6, **dadurch gekennzeichnet, dass** die Steuerung (22) mit einem Drehwinkelsensor (15), insbesondere einem Inkrementalgeber eines Antriebs (14) des Wegförderers (5) verbunden ist.

8. Vorrichtung nach Anspruch 7, **dadurch gekennzeichnet, dass** die erste Geschwindigkeit (v1) des Stauförderers (2) auf Grund einer Abweichung der tatsächlichen Lage des Buchblocks (18) zu seiner Solllage mit der Steuerung (22) veränderbar ist.

9. Vorrichtung nach einem der vorangehenden Ansprüche, **dadurch gekennzeichnet, dass** bei einer Veränderung der Geschwindigkeit des Eintaktförderers (3) über die Steuerung (22) eine maximal zulässige Beschleunigung aus Produktinformationen der zu verarbeitenden Buchblocks (18) ermittelbar und/oder während des Betriebs bestimmbar ist.

10. Vorrichtung nach Anspruch 9, **dadurch gekennzeichnet, dass** die Steuerung (22) mit einer Datenbank (22a) verbunden ist, in der weitere Produktinformationen über die zu verarbeitenden Buchblocks (18) gespeichert sind.

11. Vorrichtung nach einem der Ansprüche 5 bis 10, **dadurch gekennzeichnet, dass** oberhalb des Eintaktförderers (3) eine auf den Eintaktförderer (3) gerichtete Düsenkonfiguration (31) angeordnet und mit einem Gasreservoir (32) verbunden ist und dass die Vorrichtung die Düsenkonfiguration (31) mit dem Gasreservoir (32) umfasst, wobei die Düsenkonfiguration (31) mit dem Gasreservoir (32) geeignet ist, Luft oder ein anderes Gas aus dem Gasreservoir (32) auf den auf dem Eintaktförderer (3) transportierten Buchblock (18) zu blasen, so dass die Bogen und/oder Einzelblätter des Buchblocks (18) mit einer zusätzlichen Kraft beaufschlagt werden, die wie eine Gewichtskraft wirkt.

12. Vorrichtung nach einem der Ansprüche 5 bis 11, **dadurch gekennzeichnet, dass** im Bereich des Stauförderers (2) eine mit der Steuerung (22) verbundene Leseeinrichtung (23) angeordnet ist, mit der Identifikationsmerkmale der Buchblocks (18) erfassbar und an die Steuerung (22) weiterleitbar sind, wobei die Geschwindigkeit (v1) des Stauförderers (2) aufgrund der erfassten Identifikationsmerkmale der Buchblocks (18) sowie aufgrund weiterer Daten, insbesondere Formatdaten aus einer Datenbank (22a) oder eines externen Speichers, oder aus den Identifikationsmerkmalen selbst variierbar ist.

## Claims

1. A method of synchronizing book blocks (18) which are delivered one after the other on a feed conveyor (1) and with optional spacing to a despatch conveyor (5) having carriers (6) disposed a given distance apart, the feed conveyor (1) and the despatch conveyor (5) being connected to a control unit (22), wherein
• the book blocks (18) are transferred from the feed conveyor (1) to a buffer conveyor (2) disposed downstream,
• the book blocks (18) on the buffer conveyor (2) are transported at a first speed (v1) and in such a way that they rest against one another without any gaps,
• an individual book block (18) is transferred at the first speed (v1) from the buffer conveyor (2) to a synchronizing conveyor (3), disposed downstream and connected to the control unit (22), and with the synchronizing conveyor (3) is accelerated from the first speed (v1) to a second speed (v2),
• the book block (18) is transported at the second speed (v2) to the despatch conveyor (5) and is transferred onto the despatch conveyor (5) between two successive carriers (6),
**characterized in that** at least one book block (18) is transferred from the synchronizing conveyor (3) to a transfer conveyor (4), disposed downstream and connected to the control unit (22), and from this is transferred to the despatch conveyor (5), wherein in the region of the transfer conveyor (4) the position and/or format of the book block (18), in particular its measurement in conveying direction, is determined and the resulting value is compared with a preset value known to the control unit (22), and the result of the comparison is used to vary the speed of the transfer conveyor(4).

2. A method according to Claim 1, **characterized in that** the at least one book block (18) is delivered to the despatch conveyor (5) by the transfer conveyor (4) at the second speed (v2).

3. A method according to one of Claims 1 or 2, **characterized in that** a sensor (21), which is disposed in the region of the synchronizing conveyor (3) and is connected to the control unit (22), determines the position of each book block being transported on the synchronizing conveyor (3), and the control unit (22) compares the determined position of the book block (18) with a desired position and, in the event of a deviation from this position, corrects the position of the book block (18) by a corresponding adjustment of the synchronizing conveyor (3) up to a maximum permissible acceleration of the book block (18).

4. A method according to one of Claims 1 to 3, **characterized in that** a reader device (23), which is disposed in the region of the buffer conveyor (2) and is connected to the control unit (22), detects identification marks provided on the book block (18) and forwards these to the control unit (22), wherein the speed (v1) of the buffer conveyor (2) is varied based on the detected identification marks of the book blocks (18) as well as based on additional data, in particular format data from a data bank or an external storage unit, or from the identification marks themselves.

5. An apparatus for the synchronization of book blocks (18) which are delivered one after the other on a feed conveyor (1) and with optional spacing to a despatch conveyor (5) which is provided with carriers (6) disposed a given distance apart, the apparatus (8) including a control unit (22) which is connected to the feed conveyor (1) and to the despatch conveyor (5), and said apparatus (8) comprising:
• a buffer conveyor (2) - which is disposed downstream of the feed conveyor (1), is connected to the control unit (22) and is operated at a first speed (v1) - on which a plurality of book blocks (18) can be transported at the first speed (v1) and in such a way that they rest against one another without any gaps and,
• a synchronizing conveyor (3) disposed downstream of the buffer conveyor (2) and connected to the control unit (22), said synchronizing conveyor (3) being designed for the transport of each individual book block (18), wherein each individual book block (18) can be transferred at the first speed (v1) from the buffer conveyor (2) onto the synchronizing conveyor (3), and wherein the book block (18) can be accelerated by the synchronizing conveyor (3) from the first speed (v1) to a second speed (v2), transported at the second speed (v2) to the despatch conveyor (5) and transferred onto the despatch conveyor (5) between two successive carriers (6),
**characterized in that** located downstream of the synchronizing conveyor (3) and upstream of the despatch conveyor (5) there is a transfer conveyor (4), connected to the control unit (22) and driven at a variable speed (v3), by which at least one book block (18) moving at the speed of the synchronizing conveyor (3) can be received and transferred to the despatch conveyor (5), wherein disposed in the region of the transfer conveyor (4) there is a device (30) connected to the control unit (22) for determining the position and/or format of the book block (18), in particular its dimension in conveying direction, wherein the apparatus includes said device, and a value resulting from this determination of position and/or format can be compared with a preset value known to the control unit (22) and the result of the comparison can be used for varying the speed of the transfer conveyor (4), wherein the control unit (22) is suitable in operation for enabling the apparatus to carry out the method according to Claim 1.

6. An apparatus according to Claim 5, **characterized in that** the synchronizing conveyor (3) is equipped with a drive unit (12), wherein a sensor (21) is disposed in the region of the synchronizing conveyor (3) and wherein the drive unit (12) and the sensor (21) are connected to the control unit (22).

7. An apparatus according to Claim 5 or 6, **characterized in that** the control unit (22) is connected to an angle-of-rotation sensor (15), in particular an incremental transmitter of a drive unit (14) of the despatch conveyor (5).

8. An apparatus according to Claim 7, **characterized in that** the first speed (v1) of the buffer conveyor (2) can be varied by the control unit (22) based on a deviation of the actual position of the book block (18) from its desired position.

9. An apparatus according to one of the preceding claims, **characterized in that**, with a variation of the speed of the synchronizing conveyor (3) by way of the control unit (22), a maximum permissible acceleration can be determined from items of product information regarding the book block (18) to be processed and/or can be determined during operation.

10. An apparatus according to Claim 9, **characterized in that** the control unit (22) is connected to a data bank (22a), in which additional items of product information regarding the book block (18) to be processed are stored.

11. An apparatus according to one of Claims 5 to 10, **characterized in that** located above the synchronizing conveyor (3) there is a jet configuration (31) which is directed onto the synchronizing conveyor (3) and is connected to a gas reservoir (32), and **in that** the apparatus includes the jet configuration (31) with the gas reservoir (32), wherein the jet configuration (31) with the gas reservoir (32) is suitable for blowing air or another gas from the gas reservoir (32) onto the book block (18) being transported on the synchronizing conveyor (3) so that an additional force is applied to the sheets and/or individual leaves of the book block (18), this acting as a weight.

12. An apparatus according to one of Claims 5 to 11 **characterized in that** disposed in the region of the buffer conveyor (2) there is a reader device (23), connected to the control unit (22), by which identification marks of the book block (18) can be detected and forwarded to the control unit (22), wherein the speed (v1) of the buffer conveyor (2) can be varied based on the detected identification marks of the book block (18) as well as based on additional data, in particular format data from a data bank (22a) or an external storage device, or from the identification marks themselves.

## Revendications

1. Procédé d'introduction cadencée de corps d'ouvrage (18), délivrés en succession avec intervalles quelconques sur un convoyeur d'amenée (1), dans un convoyeur d'évacuation (5) muni d'organes d'entraînement (6) implantés selon un espacement préétabli, ledit convoyeur d'amenée (1) et ledit convoyeur d'évacuation (5) étant raccordés à une commande (22), sachant que
• les corps d'ouvrage (18) sont transférés dudit convoyeur d'amenée (1) à un convoyeur d'accumulation (2) installé en aval,
• lesdits corps d'ouvrage (18) sont transportés à une première vitesse (v1), sur ledit convoyeur d'accumulation (2), en applique les uns contre les autres sans espaces interstitiels,
• un corps d'ouvrage (18) individuel est transféré à ladite première vitesse (v1), par ledit convoyeur d'accumulation (2), à un convoyeur (3) d'introduction cadencée qui est installé en aval et est raccordé à ladite commande (22), puis est accéléré, au moyen dudit convoyeur (3) d'introduction cadencée, pour passer à une deuxième vitesse (v2) à partir de ladite première vitesse (v1),
• ledit corps d'ouvrage (18) est transporté vers ledit convoyeur d'évacuation (5), à ladite deuxième vitesse (v2), puis transféré audit convoyeur d'évacuation (5) entre deux organes d'entraînement (6) se succédant mutuellement,
**caractérisé par le fait qu'**au moins un corps d'ouvrage (18) est transféré, par le convoyeur (3) d'introduction cadencée, à un convoyeur de progression (4) qui est installé en aval, est raccordé à la commande (22) et transfère ledit corps au convoyeur d'évacuation (5), la position et/ou le format dudit corps d'ouvrage (18), en particulier son dimensionnement dans la direction du convoyage, étant détecté(e)s dans la région dudit convoyeur de progression (4), sachant qu'une valeur résultant de la détection est comparée à une valeur prédéfinie, connue de ladite commande (22), et que le résultat de la comparaison est utilisé pour faire varier la vitesse dudit convoyeur de progression (4).

2. Procédé selon la revendication 1, **caractérisé par le fait que** le corps d'ouvrage (18) à présence minimale est délivré au convoyeur d'évacuation (5), à la deuxième vitesse (v2), au moyen du convoyeur de progression (4).

3. Procédé selon l'une des revendications 1 ou 2, **caractérisé par le fait qu'**un capteur (21), placé dans la région du convoyeur (3) d'introduction cadencée et raccordé à la commande (22), définit la position du corps d'ouvrage (18) respectivement transporté sur ledit convoyeur (3) d'introduction cadencée, sachant que ladite commande (22) compare ladite position définie dudit corps d'ouvrage (18) à une position de consigne et effectue, en cas d'écart de position, une correction de la position dudit corps d'ouvrage (18) par un pilotage correspondant dudit convoyeur (3) d'introduction cadencée, jusqu'à une accélération maximale admissible dudit corps d'ouvrage (18).

4. Procédé selon l'une des revendications 1 à 3, **caractérisé par le fait qu'**un système de lecture (23), placé dans la région du convoyeur d'accumulation (2) et raccordé à la commande (22), détecte des identifiants situés sur les corps d'ouvrage (18), puis les transmet à ladite commande (22), la vitesse (v1) dudit convoyeur d'accumulation (2) étant alors modifiée sur la base desdits identifiants détectés desdits corps d'ouvrage (18), ainsi que sur la base de données autres, en particulier de données de format émanant d'une banque de données ou d'une mémoire extérieure, ou à partir des identifiants proprement dits.

5. Dispositif dévolu à l'introduction cadencée de corps d'ouvrage (18), délivrés en succession avec intervalles quelconques sur un convoyeur d'amenée (1), dans un convoyeur d'évacuation (5) muni d'organes d'entraînement (6) implantés selon un espacement préétabli, le dispositif (8) étant pourvu d'une commande (22) raccordée audit convoyeur d'amenée (1) et audit convoyeur d'évacuation (5), ledit dispositif (8) comprenant
• un convoyeur d'accumulation (2) qui est installé en aval dudit convoyeur d'amenée (1), est raccordé à ladite commande (22), est actionné à une première vitesse (v1) et sur lequel plusieurs corps d'ouvrage (18), en applique les uns contre les autres sans espaces interstitiels, peuvent être transportés à ladite première vitesse (v1),
• un convoyeur (3) d'introduction cadencée, qui est installé en aval dudit convoyeur d'accumulation (2), est raccordé à ladite commande (22) et est réalisé en vue du transport respectif d'un unique corps d'ouvrage (18), sachant qu'un unique corps d'ouvrage (18) peut être respectivement transféré dudit convoyeur d'accumulation (2) audit convoyeur (3) d'introduction cadencée, à ladite première vitesse (v1), et sachant que ledit corps d'ouvrage (18) peut être accéléré, au moyen dudit convoyeur (3) d'introduction cadencée, pour passer à une deuxième vitesse (v2) à partir de ladite première vitesse (v1), qu'il peut être transporté vers ledit convoyeur d'évacuation (5) à ladite deuxième vitesse (v2) et peut, de surcroît, être transféré audit convoyeur d'évacuation (5) entre deux organes d'entraînement (6) se succédant mutuellement,
**caractérisé par le fait qu'**un convoyeur de progression (4) installé en aval du convoyeur (3) d'introduction cadencée et en amont du convoyeur d'évacuation (5), raccordé à la commande (22) et pouvant être entraîné à une vitesse variable (v3), permet de prélever au moins un corps d'ouvrage (18) à la vitesse dudit convoyeur (3) d'introduction cadencée, et de le transférer audit convoyeur d'évacuation (5), sachant qu'un système (30), raccordé à ladite commande (22) et affecté à la détection de la position et/ou du format dudit corps d'ouvrage (18), en particulier de son dimensionnement dans la direction du convoyage, est implanté dans la région dudit convoyeur de progression (4), ledit dispositif étant équipé dudit système, sachant qu'une valeur résultant de la détection peut être comparée à une valeur prédéfinie, connue de ladite commande (22), et que le résultat de la comparaison peut être utilisé pour faire varier la vitesse dudit convoyeur de progression (4), ladite commande (22) étant appropriée pour inciter ledit dispositif, en service, à la mise en oeuvre du procédé conforme à la revendication 1.

6. Dispositif selon la revendication 5, **caractérisé par le fait que** le convoyeur (3) d'introduction cadencée est équipé d'un entraînement (12), un capteur (21) étant implanté dans la région dudit convoyeur (3) d'introduction cadencée, ledit entraînement (12) et ledit capteur (21) étant raccordés à la commande (22).

7. Dispositif selon la revendication 5 ou 6, **caractérisé par le fait que** la commande (22) est connectée à un capteur (15) d'angles de rotation, notamment à un codeur incrémental d'un entraînement (14) du convoyeur d'évacuation (5).

8. Dispositif selon la revendication 7, **caractérisé par le fait que** la première vitesse (v1) du convoyeur d'accumulation (2) peut être modifiée, au moyen de la commande (22), sur la base d'un écart de la position effective du corps d'ouvrage (18) par rapport à sa position de consigne.

9. Dispositif selon l'une des revendications précédentes, **caractérisé par le fait que**, lors d'une modification de la vitesse du convoyeur (3) d'introduction cadencée, au moyen de la commande (22), une accélération maximale admissible peut être définie, et/ou déterminée au cours du fonctionnement, à partir d'informations de produit des corps d'ouvrage (18) devant être traités.

10. Dispositif selon la revendication 9, **caractérisé par le fait que** la commande (22) est connectée à une banque de données (22a) dans laquelle sont stockées des informations de produit supplémentaires, relatives aux corps d'ouvrage (18) devant être traités.

11. Dispositif selon l'une des revendications 5 à 10, **caractérisé par le fait qu'**un ensemble de buses (31), dirigé vers le convoyeur (3) d'introduction cadencée et raccordé à un réservoir de gaz (32), est installé au-dessus dudit convoyeur (3) d'introduction cadencée ; et **par le fait que** ledit dispositif inclut ledit ensemble de buses (31) associé audit réservoir de gaz (32), lequel ensemble de buses (31), associé audit réservoir de gaz (32), est apte à insuffler, sur le corps d'ouvrage (18) transporté sur ledit convoyeur (3) d'introduction cadencée, de l'air ou un autre gaz provenant dudit réservoir de gaz (32), de sorte que les feuillets et/ou les feuilles individuelles dudit corps d'ouvrage (18) sont sollicité(e)s par une force additionnelle agissant comme une force proportionnelle au poids.

12. Dispositif selon l'une des revendications 5 à 11, **caractérisé par le fait qu'**un système de lecture (23) raccordé à la commande (22), au moyen duquel des identifiants des corps d'ouvrage (18) peuvent être détectés et transmis à ladite commande (22), est placé dans la région du convoyeur d'accumulation (2), la vitesse (v1) dudit convoyeur d'accumulation (2) pouvant être modifiée sur la base desdits identifiants détectés desdits corps d'ouvrage (18), ainsi que sur la base de données autres, en particulier de données de format émanant d'une banque de données (22a) ou d'une mémoire extérieure, ou à partir des identifiants proprement dits.
